# EUROPÄISCHE PATENTSCHRIFT

(11) **EP 3 690 141 B1**
(45) Veröffentlichungstag und Bekanntmachung des Hinweises auf die Patenterteilung: **04.05.2022**
(21) Anmeldenummer: 20160482.4
(22) Anmeldetag: 21.07.2017
(51) Int. Cl.: E01C 19/48

(54) **STRASSENFERTIGER ODER BESCHICKERFAHRZEUG MIT SCHUBEINRICHTUNG FÜR EINEN MATERIALÜBERGABEVORGANG**
PAVER OR FEEDER VEHICLE WITH PUSHING DEVICE FOR A MATERIAL HANDOVER PROCESS
FINISSEUSE DE ROUTE OU VÉHICULE CHARGEUR COMPRENANT UN MÉCANISME DE POUSSÉE POUR UN PROCESSUS DE TRANSFERT DE MATIÈRE

(43) Veröffentlichungstag der Anmeldung: 05.08.2020
(62) Teilanmeldung aus: 17182524.3
(73) Patentinhaber: Joseph Vögele AG, 67067 Ludwigshafen (DE)
(72) Erfinder: BUSCHMANN, Martin, 67435 Neustadt (DE); SCHMIDT, Thomas, 68723 Plankstadt (DE); KIRSCHBAUM, Martin, 67117 Limburgerhof (DE)
(74) Vertreter: Grünecker Patent- und Rechtsanwälte PartG mbB

(56) Entgegenhaltungen:
- EP-A1- 2 527 534
- DE-A1- 19 800 915
- DE-A1-102013 216 374
- DE-U1- 9 203 902
- US-A1- 2016 230 355

## Beschreibung

Die vorliegende Erfindung bezieht sich auf einen Straßenfertiger oder auf ein Beschickerfahrzeug für einen Straßenfertiger gemäß dem Oberbegriff des Anspruchs 1.

Ein Straßenfertiger zum Herstellen einer Einbauschicht aus einem Einbaumaterial sowie ein Beschickerfahrzeug zum Beliefern des Straßenfertigers mit einem zu verbauenden Einbaumaterial umfassen jeweils einen Gutbunker, um darin ein Einbaumaterial für deren Betrieb zu bevorraten. Die jeweiligen Gutbunker der vorgenannten selbstfahrenden Straßenbaumaschinen werden auf der Baustelle von LKWs mit dem Einbaumaterial beliefert. Das gelieferte Einbaumaterial wird von den LKWs in die jeweiligen Gutbunker geschüttet. Für den Materialübergabevorgang besitzen der Straßenfertiger und das Beschickerfahrzeug jeweils vorne, vorderhalb des jeweiligen Gutbunkers eine Schubeinrichtung, woran ein LKW mit seinen Hinterreifen rückwärts andockt. Das Andocken an der Schubeinrichtung bewirkt, dass der LKW im Leerlauf in einem vorbestimmten Abstand vom Straßenfertiger oder Beschickerfahrzeug während des Materialübergabevorgangs vorne hergeschoben wird.

Die EP 2 527 534 A1 und die EP 0 667 415 A1 offenbaren jeweils einen Straßenfertiger, der für den Materialübergabevorgang eine Schubeinrichtung umfasst, an deren Schubrollen Hinterreifen eines LKWs andocken können.

Die US 5,955,754 A offenbart einen Straßenfertiger mit einer daran befestigten Schubeinrichtung, die ein Paar schwenkbar gelagerte Schubrollen trägt. Als Dämpfelement kommt für die Schubrollen ein Hydraulikzylinder zum Einsatz.

Die US 5,004,394 A offenbart blattfedergelagerte, schwenkbar gelagerte sowie hydraulisch verstellbare Schubrollen einer Schubeinrichtung.

Die EP 2 295 641 A2 offenbart einen Straßenfertiger und ein Beschickerfahrzeug mit einer Schubeinrichtung, deren Schubrollen mittels Hydraulikzylindern verstellbar gelagert sind.

Die DE 10 2011 120 161 A1, die DE 20 2004 007 576 U1 und die US 8,827,592 B2 offenbaren jeweils eine Schubeinrichtung für einen Straßenfertiger, deren Traverse an unterschiedlichen Positionen am Chassis des Straßenfertigers befestigbar ist.

DE 198 00 915 A1 offenbart einen Straßenfertiger mit Schubrollen zum Abstützen an Hinterreifen eines Lastkraftwagens und mit Klammerrollen zum lösbaren Eingriff an Felgen.

Problematisch ist, dass weltweit für den Materialübergabevorgang LKWs mit unterschiedlich langen hinteren Kippmuldenüberständen zum Einsatz kommen, sodass das Andocken an herkömmlichen Schubeinrichtungen nicht immer möglich ist.

Für auf dem europäischen Markt eingesetzte LKWs waren bisher wegen deren geringem Kippmuldenüberstand Schubeinrichtungen ausreichend, die sich als komplette Einheit am Chassis in Fahrtrichtung versetzt in unterschiedlichen Positionen montieren lassen. Wegen des hohen Gewichts lassen sich allerdings gesamte Schubeinrichtungen nur in beschränktem Umfang versetzen.

Für LKWs mit längeren Kippmuldenüberständen, wie sie in einigen Ländern zum Einsatz kommen, reichen allerdings die bekannten Schubeinrichtungen nicht aus, um die daran befestigten Schubrollen an den Hinterreifen solcher LKWs anzudocken. Demzufolge können LKWs, die eine Kippmulde mit Überlänge aufweisen, während des Materialübergabevorgangs nicht in einem vorbestimmten Abstand mittels des Straßenfertigers oder des Beschickerfahrzeugs vorne hergeschoben werden. Für das Abkippen des Einbaumaterials ist es daher schwierig, den vorbestimmten Abstand zwischen dem LKW und dem nachfolgenden Straßenfertiger oder Beschickerfahrzeug einzuhalten, weil der LKW-Fahrer selber den Abstand zum Straßenfertiger oder Beschickerfahrzeug regulieren muss. Das Risiko einer Kollision zwischen dem LKW und dem hinterherfahrenden Straßenfertiger oder Beschickerfahrzeug wird dadurch erhöht.

Angesichts der aus dem Stand der Technik resultierenden Nachteile ist es die Aufgabe der Erfindung, einen Straßenfertiger oder ein Beschickerfahrzeug mit einer Schubeinrichtung auszustatten, die dazu geeignet ist, wahlweise sowohl an Hinterreifen eines LKWs mit einem kurz ausgebildeten Kippmuldenüberstand als auch an Hinterreifen eines LKWs mit einem lang ausgebildeten Kippmuldenüberstand anzudocken, um die jeweiligen LKWs in einem vorbestimmten Abstand während eines Materialübergabevorgangs vorne herzuschieben.

Diese Aufgabe wird gelöst durch eine Straßenbaumaschine in Form eines Straßenfertigers oder eines Beschickerfahrzeugs mit den technischen Merkmalen gemäß dem Anspruch 1. Verbesserte Weiterbildungen der Erfindung sind in den Unteransprüchen angegeben.

Die Erfindung betrifft einen Straßenfertiger zum Herstellen einer Einbauschicht aus einem Einbaumaterial. Ebenso betrifft die Erfindung ein Beschickerfahrzeug zum Beliefern des Straßenfertigers mit einem zu verbauenden Einbaumaterial.

Der Straßenfertiger oder das Beschickerfahrzeug umfassen jeweils einen Gutbunker zur Aufnahme des Einbaumaterials, der in Fahrrichtung gesehen vorne auf einem Chassis des Straßenfertigers oder des Beschickerfahrzeugs angeordnet ist, sowie eine Schubeinrichtung für einen Materialübergabevorgang. Die Schubeinrichtung ist, in Fahrtrichtung gesehen, vorderhalb des Gutbunkers am Chassis derart befestigt, dass daran gelagerte Schubrollen an Hinterrädern eines LKWs andocken können, wenn der LKW das Einbaumaterial in den Gutbunker des Straßenfertigers oder des Beschickerfahrzeugs schüttet.

Die Schubrollen verfügen über ein Paar erster Schubrollen, die entlang der Fahrtrichtung betrachtet relativ zu einer Traverse der Schubeinrichtung in mindestens einer ersten Position lagerbar sind, in welcher die ersten Schubrollen in einer Aufnahme der Traverse befestigt sind.

Erfindungsgemäß ist vorgesehen, dass die Schubeinrichtung ein weiteres Paar zweiter Schubrollen umfasst, die in horizontaler Projektionsebene betrachtet wahlweise den ersten Schubrollen voranstellbar sind.

Bei der Erfindung ist das zweite Paar von Schubrollen derart relativ zu den ersten Schubrollen lagerbar, dass sie den ersten Schubrollen vorangestellt an der Schubeinrichtung positioniert sind. Die zweiten Schubrollen reichen dann bis zu den Hinterreifen eines für den Materialübergabevorgang eingesetzten LKWs mit weit nach hinten überstehendem Kippmuldenüberstand.

Damit können selbst LKWs mit einem langen Kippmuldenüberstand in einem vorbestimmten Abstand vor dem Straßenfertiger oder dem Beschickerfahrzeug hergeschoben werden, ohne dass es zu einer Kollision zwischen dem LKW mit dem Straßenfertiger oder dem Beschickerfahrzeug kommt. Das Einbaumaterial kann dann einwandfrei vom LKW in den Gutbunker des Straßenfertigers oder des Beschickerfahrzeugs gekippt werden.

Vorzugsweise kann das Paar erster Schubrollen unabhängig von der eingestellten Position des Paars zweiter Schubrollen an der Schubeinrichtung montiert bleiben. Weiter vorzugsweise ist das Paar zweiter Schubrollen an der Schubeinrichtung integriert ausgebildet. Das Paar zweiter Schubrollen kann somit schnell, insbesondere werkzeuglos, wahlweise zum Einsatz kommen. Damit ist gemeint, dass die zweiten Schubrollen ohne den Einsatz zusätzlicher Werkzeuge an der Schubeinrichtung zwischen den dafür vorbestimmten Positionen verstellbar gelagert sind.

Vorzugsweise umfasst die Schubeinrichtung mindestens einen Schwenkmechanismus, der dazu ausgebildet ist, das Paar zweiter Schubrollen in eine dem Paar erster Schubrollen in Fahrtrichtung betrachtet vorangelagerte, zweite Position zu bringen. LKWs mit weit überstehendem Kippmuldenüberstand können dann zur Materialübergabe mit ausreichend großem Abstand vor dem Stra-βenfertiger oder Beschickerfahrzeug vorangeschoben werden, wenn die Schubeinrichtung mit ihren zweiten Schubrollen an den Hinterreifen des LKWs andockt.

Insbesondere ist der Schwenkmechanismus derart ausgebildet, dass er das Paar zweiter Schubrollen relativ zur Traverse der Schubeinrichtung ortsfest halten kann, wenn das Paar zweiter Schubrollen für einen Materialübergabevorgang an Hinterreifen des LKWs andockt. Damit lässt sich der LKW während des Materialübergabevorgangs relativ zum an seinen Hinterreifen anschiebenden Straßenfertiger oder Beschickerfahrzeug in einem vorbestimmten gleichbleibenden Abstand vorne herschieben.

Bevorzugt ist das Paar zweiter Schubrollen mittels des Schwenkmechanismus nach unten geklappt in einer Ruheposition, wodurch das andere Paar erster Schubrollen für einen Materialübergabevorgang zum Einsatz kommen kann, in einer Transportposition, in welcher das Paar zweiter Schubrollen in Richtung des Gutbunkers hochgeklappt ist, und/oder für einen Materialübergabevorgang in einer zweiten, den ersten Schubrollen vorangestellten Position gelagert. Ein Wechsel zwischen den jeweiligen Positionen ist mittels des Schwenkmechanismus schnell durchführbar.

Eine bevorzugte Weiterbildung sieht vor, dass der Schwenkmechanismus an der Traverse verriegelbar ist, wenn das Paar zweiter Schubrollen für den Materialübergabevorgang in der zweiten Position eingestellt ist. Damit kann das Paar zweiter Schubrollen relativ zur Traverse besonders ortsfest gehalten werden, während die Schubrollen an den Hinterreifen des LKWs ansetzten.

Eine vorteilhafte Weiterbildung sieht vor, dass die Position der zweiten Schubrollen relativ zur Lage der ersten Schubrollen hydraulisch, mechanisch oder elektromechanisch verstellbar ist. Insbesondere ist mindestens ein Hydraulikzylinder vorgesehen, der dazu ausgebildet ist, den Schwenkmechanismus zum Positionieren der zweiten Schubrollen zu betätigen.

Vorzugsweise ist das Paar zweiter Schubrollen schwenkbar um eine Lagerachse des Paars erster Schubrollen gelagert. Trotz des Einsatzes eines ersten sowie eines zweiten Paars von Schubrollen ist dadurch ein kompakter sowie stabiler Zusammenbau der Schubeinrichtung möglich.

Hilfreich ist es, wenn die zweiten Schubrollen von einem Bedienstand des Straßenfertigers oder Beschickerfahrzeugs aus verstellbar sind. Vorzugsweise ist dafür mindestens ein hydraulischer, elektrischer und/oder mechanischer Verstellantrieb vorgesehen.

Vorteilhaft ist es, wenn die Traverse an einem Querbalken des Chassis derart befestigt ist, dass sie in einer horizontalen Ebene betrachtet samt den daran befestigten Schubrollen relativ zum Querbalken um einen vorbestimmten Kippwinkel kippbar gelagert ist. Dadurch ist die Schubeinrichtung in der Lage, eine gewisse Schrägausrichtung eines rückwärts an ihr andockenden LKWs auszugleichen.

Gemäß einer bevorzugten Variante ist vorgesehen, dass die Traverse vorne am Chassis, insbesondere stufenlos, in verschiedenen Positionen entlang der Fahrtrichtung gesehen befestigbar ist. Die Schubeinrichtung lässt sich damit insgesamt als Modul an unterschiedlichen Positionen am Chassis des Straßenfertigers oder des Beschickerfahrzeugs befestigen.

Vorzugsweise ist die Schubeinrichtung als Modul mechanisch, pneumatisch und/oder hydraulisch gedämpft am Chassis des Straßenfertigers oder Beschickerfahrzeugs gelagert. Die Dämpfwirkung wird insbesondere dadurch erzielt, indem mindestens eine Dämpfeinheit funktional zwischen der Traverse der Schubeinrichtung und dem Querbalken des Chassis angeordnet ist.

Die Erfindung wird anhand der folgenden Figuren genauer erläutert. Im Einzelnen zeigen:
- Fig. 1: einen Straßenfertiger zum Herstellen einer Einbauschicht aus einem Einbaumaterial,
- Fig. 2: ein Beschickerfahrzeug zum Beliefern des in Figur 1 gezeigten Straßenfertigers mit einem zu verbauenden Einbaumaterial,
- Fig. 3: eine schematische Darstellung eines Straßenfertigers sowie eines LKWs für einen Materialübergabevorgang,
- Fig. 4: eine nicht erfindungsgemäße Schubeinrichtung ohne Wechselaufsatz,
- Fig. 5: eine nicht erfindungsgemäße Schubeinrichtung mit Wechselaufsatz,
- Fig. 6: die nicht erfindungsgemäße Schubeinreichung in teilweiser Explosionsdarstellung,
- Fig. 7: die Schubeinrichtung gemäß Fig. 5 mit hochgeklappten Schubrollen,
- Fig. 8: eine Prinzipskizze einer Schubeinrichtung mit einem Paar erster und zweiter Schubrollen,
- Fig. 9: eine Schubeinrichtung gemäß Fig. 8 mit wahlweise einsetzbaren ersten und zweiten Schubrollen,
- Fig. 10: die Schubeinrichtung gemäß Fig. 8 mit heruntergeklappten zweiten Schubrollen,
- Fig. 11: eine Seitenansicht der Schubeinrichtung gemäß Fig. 8 mit vorangestellten zweiten Schubrollen im angedockten Zustand an Hinterrädern eines LKWs, und
- Fig. 12: die Schubeinrichtung gemäß Fig. 8 mit angedockten ersten Schubrollen an Hinterrädern des LKWs.

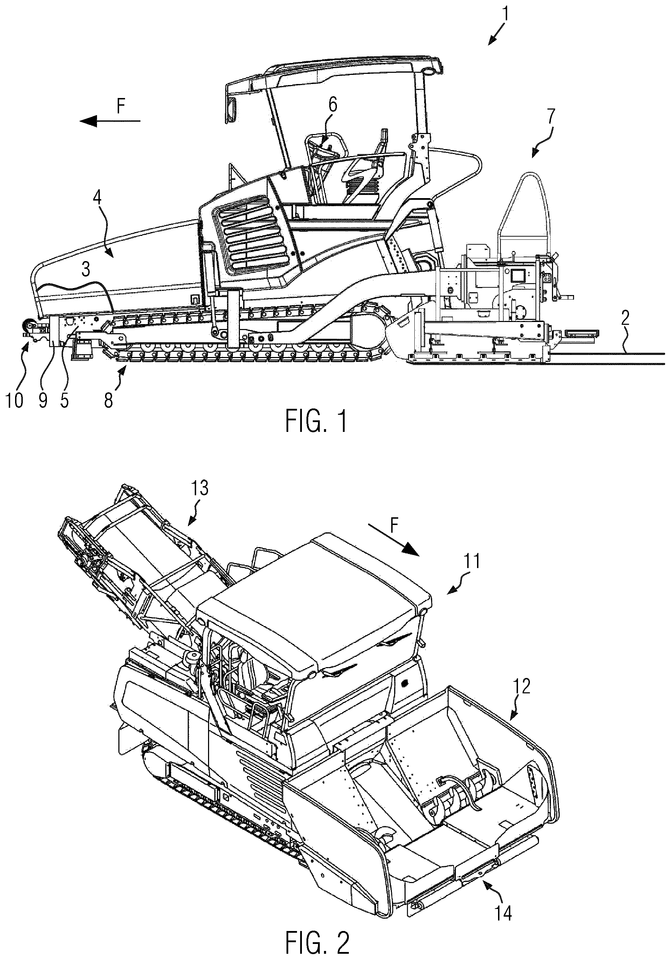

Figur 1 zeigt eine Straßenbaumaschine in Form eines Straßenfertigers 1 zum Herstellen einer Einbauschicht 2. Der Straßenfertiger 1 umfasst einen Gutbunker 4, in welchem ein Einbaumaterial 3 zum Herstellen der Einbauschicht 2 bevorratet ist. Der Gutbunker 4 ist auf einem Chassis 5 des Straßenfertigers 1 in Fahrrichtung F betrachtet vorne angeordnet. Der Straßenfertiger 1 umfasst ferner einen Bedienstand 6, von wo aus ein Bediener den Straßenfertiger 1 steuern kann. In Fahrtrichtung F betrachtet hinten am Straßenfertiger 1 ist eine bewegbare Einbaubohle 7 angeordnet, mittels welcher der Straßenfertiger 1 das Einbaumaterial 3 zur neuen Einbauschicht 2 verarbeitet. Dafür wird das vorne im Gutbunker 4 bevorratete Einbaumaterial 3 entgegen der Fahrtrichtung F mittels einer nicht gezeigten Längsfördervorrichtung nach hinten transportiert, vor der Einbaubohle 7 ausgebreitet und schließlich von der Einbaubohle 7 zur neuen Einbauschicht 2 verdichtet.

Gemäß Figur 1 umfasst der Straßenfertiger 1 ein als Raupenfahrwerk ausgebildetes Fahrwerk 8. Anstelle des Raupenfahrwerks könnte das Fahrwerk 8 mit einem Radantrieb ausgestattet sein. Das Fahrwerk 8 ist am Chassis 5 des Straßenfertigers 1 befestigt. In Fahrtrichtung F betrachtet vorne am Chassis 5 ist ein Querbalken 9 befestigt. Vorderhalb des Querbalkens 9 ist eine Schubeinrichtung 10 gelagert. Mit der Schubeinrichtung 10 dockt der Straßenfertiger 1 während eines Materialübergabevorgangs an Hinterrädern eines Materiallieferfahrzeugs an, um es vordem Straßenfertiger 1 in einem vorbestimmten Abstand herzuschieben, während das Materiallieferfahrzeug das Einbaumaterial 3 in den Gutbunker 4 kippt.

Figur 2 zeigt ein Beschickerfahrzeug 11 zum Beliefern eines gemäß Figur 1 gezeigten Straßenfertigers 1. Das Beschickerfahrzeug 11 hat einen Gutbunker 12 zur Bevorratung des Einbaumaterials 3. Das Beschickerfahrzeug 11 verfügt ferner über eine Materialfördervorrichtung 13, die dazu ausgebildet ist, das Einbaumaterial 3 aus dem Gutbunker 12 aufzunehmen und es zum Einbau einem gemäß Figur 1 gezeigten Straßenfertiger 1 zu übergeben. Dafür fährt das Beschickerfahrzeug 11 vor dem Straßenfertiger 1 her, während das Einbaumaterial 3 von der Materialfördervorrichtung 13 in den Gutbunker 4 des Straßenfertigers 1 gefördert wird.

Figur 2 zeigt weiter, dass am Beschickerfahrzeug 11 vorderhalb des Gutbunkers 12 eine Schubeinrichtung 14 gelagert ist. Die Schubeinrichtung 14 ist an einem nicht gezeigten Querbalken befestigt. Wie die Schubeinrichtung 10 des Straßenfertigers 1 aus Figur 1 ist auch die Schubeinrichtung 14 des Beschickerfahrzeugs 11 zum Andocken an Hinterreifen eines Materiallieferfahrzeugs ausgebildet, um das Materiallieferfahrzeug im Leerlauf während eines Materialübergabevorgangs in einem vorbestimmten Abstand vor dem Beschickerfahrzeug 11 herzuschieben.

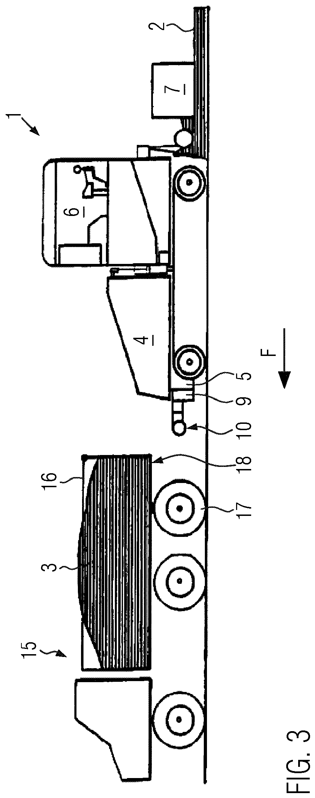

Figur 3 zeigt schematisch den Straßenfertiger 1 aus Figur 1 sowie einen davor positionierten LKW 15. Der LKW 15 besitzt eine Kippmulde 16, die mit dem Einbaumaterial 3 beladen ist. Während des Materialübergabevorgangs wird das Einbaumaterial 3 aus der Kippmulde 16 des LKWs 15 heraus in den Gutbunker 4 des Straßenfertigers 1 gekippt. Eine vergleichbare Materialübergabe könnte der LKW 15 auch mit einem Beschicker 11 gemäß Figur 2 durchführen. Dass die Schubeinrichtung 10 an den Hinterreifen 17 des LKWs 15 andocken kann, hängt davon ab, wie lang ein in Figur 3 gezeigter Überstand 18 der Kippmulde 16 ausgebildet ist.

Für den Fall, dass der Überstand 18 zu weit nach hinten über die Hinterreifen 17 des LKWs 15 hinausragt, kann der LKW 15 nicht an der Schubeinrichtung 10 mit seinen Hinterreifen 17 andocken, weil dies ggf. zu einer Kollision der Kippmulde 16 mit dem Gutbunker 4, 12 des Straßenfertigers 1 oder Beschickers 11 führen würde. In solchen Fällen muss der LKW-Fahrer den LKW 15 während des Materialübergabevorgangs in einem gleichbleibenden Abstand relativ zum hinterherfahrenden Straßenfertiger 1 (oder Beschickerfahrzeug 11) kontrolliert selber lenken, damit es nicht zu einer Kollision der Kippmulde 16 mit dem Gutbunker 4 kommt. Dies hat sich in der Praxis allerdings als schwierig erwiesen.

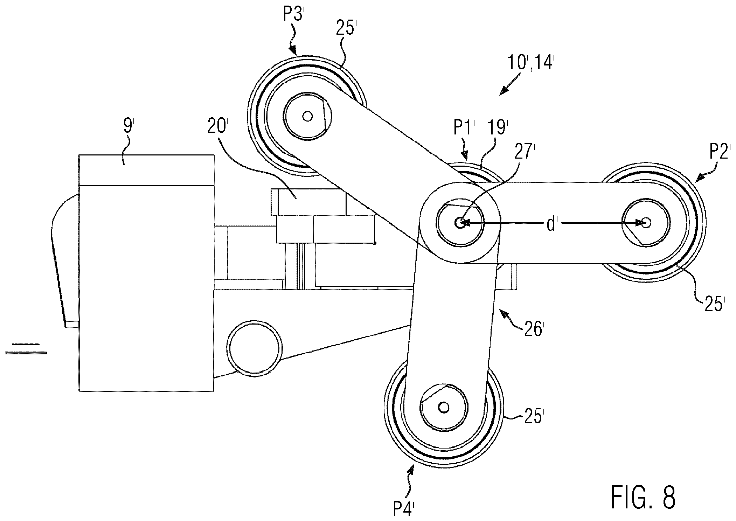

In den folgenden Figuren 8 bis 12 wird die Erfindung anhand vom Straßenfertiger 1 oder vom Beschickerfahrzeug 11 isoliert dargestellten Schubeinrichtungen 10', 14' erläutert.

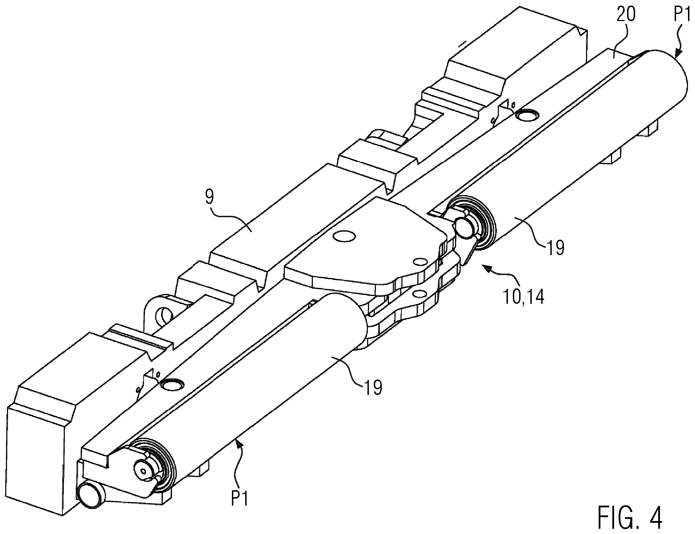

Figur 4 zeigt eine nicht erfindungsgemäße Schubeinrichtung 10, 14 mit einem Paar erster Schubrollen 19, die drehbar an einer Traverse 20 gelagert sind. Die Traverse 20 ist an dem Querbalken 9 befestigt. Das Paar erster Schubrollen 19 ist gemäß Figur 4 in einer ersten Position P1 gelagert. Die in der ersten Position P1 gelagerten Schubrollen 19 können an Hinterreifen eines LKWs andocken, dessen Kippmuldenüberstand kurz ausgebildet ist.

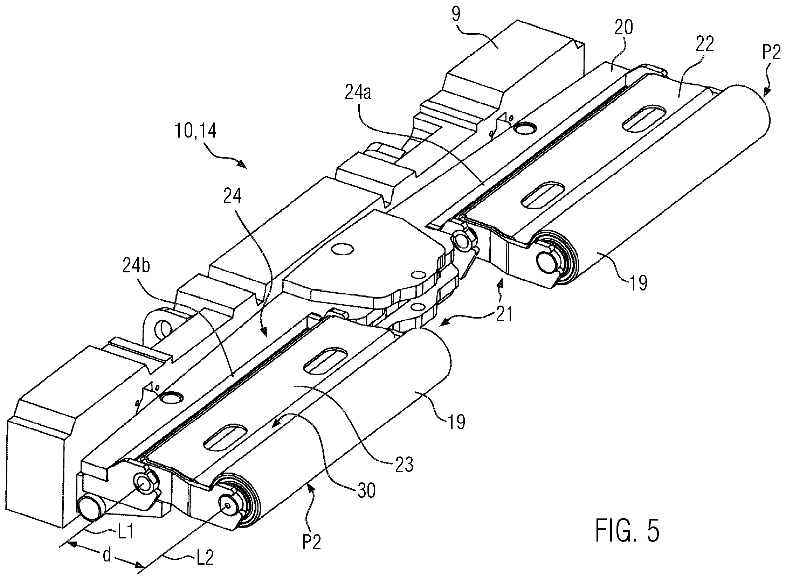

Gemäß Figur 5 ist die Schubeinrichtung 10, 14 um einen Wechselaufsatz 21 erweitert, der die Schubrollen 19 relativ zu deren in Figur 4 gezeigten ersten Position P1 in einer weiter nach vorn verlagerten zweiten Position P2 trägt. Gemäß Figur 5 sind eine erste Lagerachse L1, entlang welcher die ersten Schubrollen 19 in der erster Position P1 gelagert sind, und eine zweite Lagerachse L2, entlang welcher die ersten Schubrollen 19 in der zweiten Position P2 gelagert sind, durch einen Abstand d zueinander parallel versetzt angeordnet. Der Abstand d beträgt beispielsweise 300mm.

Als Verlängerungsteil kann der Wechselaufsatz 21 das Paar erster Schubrollen 19 derart weit nach vorne versetzt in der zweiten Position P2 tragen, dass die Schubrollen 19 an Hinterreifen eines LKWs mit großem Kippmuldenüberstand für einen Materialübergabevorgang andocken können.

Ferner zeigt Figur 5, dass der Wechselaufsatz 21 in einer Aufnahme 24 der Traverse 20 gelagert ist. Zum Tragen der Schubrollen 19 bildet der Wechselaufsatz 21 eine Rollenaufnahme 30 aus, die entsprechend der Aufnahme 24 der Traverse 20 konfiguriert ist. Der Wechselaufsatz 21 ist in Figur 5 zweiteilig aus einem ersten Aufsatz 22 und einem zweiten Aufsatz 23 ausgebildet. Die beiden Aufsätze 22, 23 können an Stelle der ersten Schubrollen 19 in einer jeweiligen ersten und einer zweiten Aufnahme 24a, 24b an der Traverse 20 eingehängt werden.

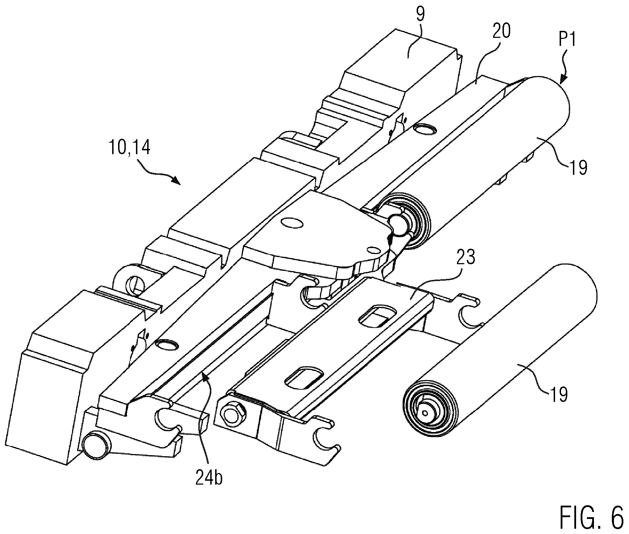

Figur 6 verdeutlicht, dass die Schubeinrichtung 10, 14 als Modul wahlweise mit oder ohne Wechselaufsatz 21, insbesondere den dazugehörigen Aufsätzen 22, 23, zusammenbaubar ist.

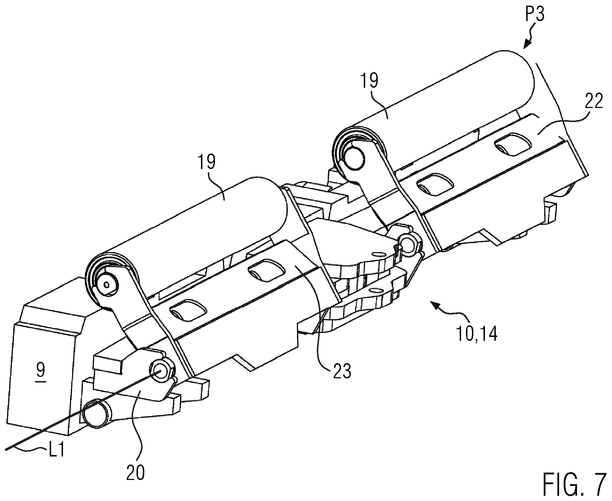

Figur 7 zeigt die Schubeinrichtung 10, 14 mit hochgeklappten Schubrollen 19. Die Schubrollen 19 sind dabei in einer dritten Position P3 gelagert. Dafür sind die jeweiligen Aufsätze 22, 23 um die Lagerachse L1, mit geneigter Ausrichtung zum Gutbunker 4 hin hochgeschwenkt gelagert und stützen sich zum Halten der Schubrollen 19 in der dritten Position P3 an der Traverse 20 ab. In diese Einstellung kann die Schubeinrichtung 10, 14 für einen Transport des Straßenfertigers 1 bzw. des Beschickerfahrzeugs 11 gebracht werden.

Figur 8 zeigt eine erfindungsgemäße Schubeinrichtung 10', 14' des Straßenfertigers 1 oder des Beschickerfahrzeugs 11.

Figur 8 zeigt in Seitenansicht die Schubeinrichtung 10', 14', die ein Paar erster Schubrollen 19' in einer ersten Position P1' sowie ein weiteres Paar zweiter Schubrollen 25' umfasst, die in einer zweiten Position P2' den ersten Schubrollen 19' um einen Abstand d' vorangestellt angeordnet sind. Gemäß Figur 8 sind die zweiten Schubrollen 25' mittels eines Schwenkmechanismus 26' in unterschiedlichen Lagen positionierbar. Außer der in Figur 8 gezeigten zweiten Position P2' können die Schubrollen 25' für einen Transport des Straßenfertigers 1 bzw. des Beschickerfahrzeugs 11 hochgeklappt in einer Transportposition P3' oder, wenn das Paar erster Schubrollen 19' für den Materialübergabevorgang eingesetzt werden soll, heruntergeklappt in einer Ruheposition P4' gelagert werden.

Gemäß Figur 8 ist das Paar zweiter Schubrollen 25' schwenkbar um eine Lagerachse 27' der ersten Schubrollen 19' gelagert. Zum Andocken der Schubeinrichtung 10', 14' an Hinterreifen 17 eines in Figur 3 gezeigten LKWs 15, bei welchem der Überstand 18 der Kippmulde 16 lang ausgebildet ist, trägt der Schwenkmechanismus 26' das Paar zweiter Schubrollen 25' in der gemäß Figur 8 gezeigten zweiten Position P2'. Das Paar erster Schubrollen 19' der Schubeinrichtung 10', 14' kommt wahlweise dann zum Einsatz, wenn der Überstand 18 des LKWs 15 kurz ausgebildet ist, sodass der LKW 15 während eines Materialübergabevorgangs näher am Straßenfertiger 1 oder Beschickerfahrzeug 11 geschoben werden kann, um das Einbaumaterial 3 in den Gutbunker 4, 12 zu schütten. In diesem Fall werden die zweiten Schubrollen 25' durch den Schwenkmechanismus 26' in der Ruheposition P4' gehalten.

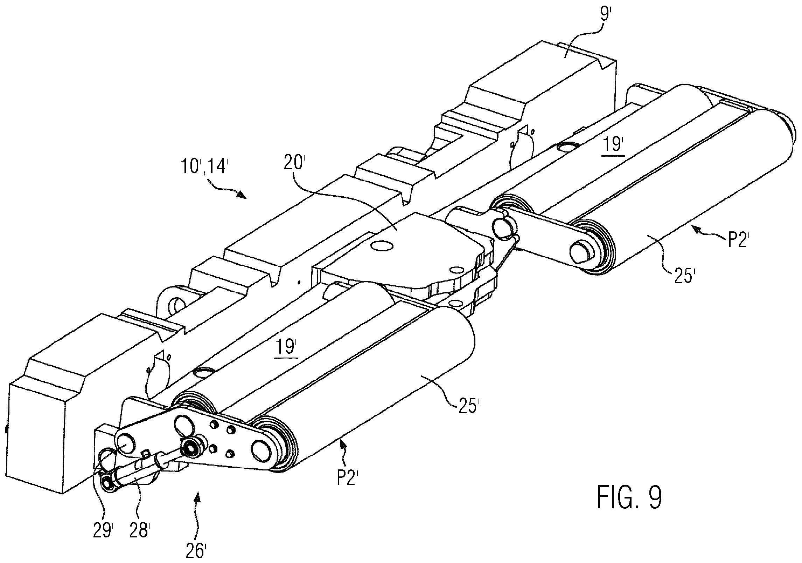

Figur 9 zeigt eine perspektivische Darstellung der im Zusammenhang mit Figur 8 beschriebenen Schubeinrichtung 10', 14'. Gemäß Figur 9 ist das Paar zweiter Schubrollen 25' dem Paar erster Schubrollen 19' vorangestellt gelagert. Der Schwenkmechanismus 26' hält das Paar zweiter Schubrollen 25' in horizontaler Projektionsebene betrachtet fluchtend zu den ersten Schubrollen 19' in der zweiten Position P2'. Der Schwenkmechanismus 26' ist hier mittels mindestens eines Hydraulikzylinders 28' verstellbar, der sich an der Traverse 20' abstützt. Ein solcher Hydraulikzylinder 28' kann auf beiden Seiten der Schubeinrichtung 10', 14' vorgesehen sein. Ferner zeigt Figur 9, dass der Schwenkmechanismus 26' anhand einer Verriegelung 29' an der Traverse 20' fixierbar ist, um die zweiten Schubrollen 25' in der zweiten Position P2' zu positionieren.

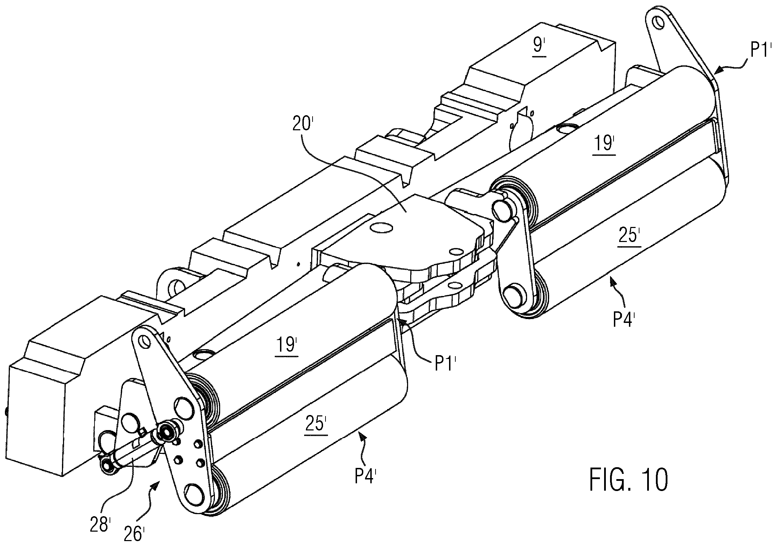

Figur 10 zeigt die Schubeinrichtung 10', 14', wobei das Paar zweiter Schubrollen 25' in die Ruheposition P4' versetzt ist. Darin wird das Paar zweiter Schubrollen 25' gemäß Figur 8 unterhalb dem Paar erster Schubrollen 19' positioniert. In dieser Einstellung kann die Schubeinrichtung 10', 14' dafür eingesetzt werden, mittels der ersten Schubrollen 19' an Hinterreifen 17 eines in Figur 3 gezeigten LKWs 15 anzudocken, wenn der Überstand 18 der Kippmulde 16 eine geringe Überlänge aufweist. Der LKW 15 kann dann näher am Straßenfertiger 1 bzw. Beschickerfahrzeug 11 geschoben werden, damit das Einbaumaterial 3 aus der Kippmulde 16 einwandfrei in den Gutbunker 4, 12 geschüttet werden kann.

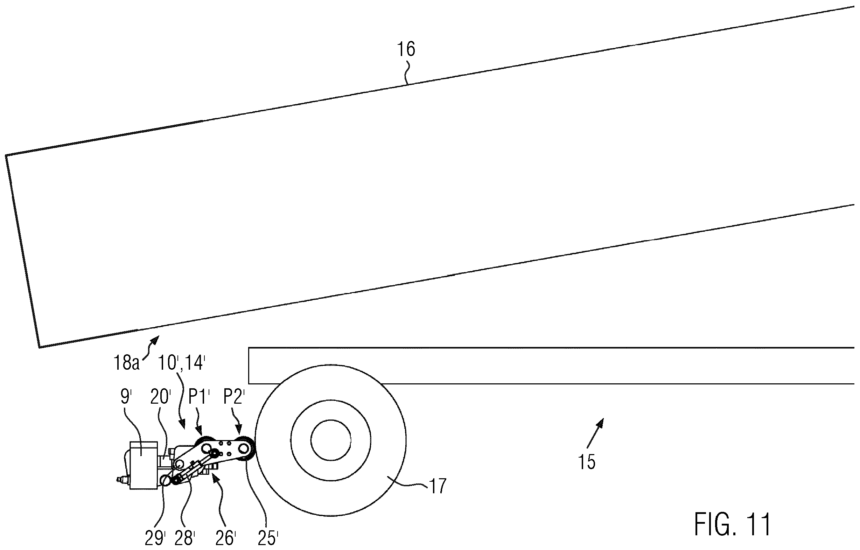

Figur 11 zeigt das Andocken der Schubeinrichtung 10', 14' an Hinterreifen 17 des LKWs 15 mit langem Kippmuldenüberstand 18a. In diesem Fall ist das Paar zweiter Schubrollen 25' der Schubeinrichtung 10', 14' mittels des Schwenkmechanismus 26' in der zweiten Position P2' gelagert. In der zweiten Position P2' ist das Paar zweiter Schubrollen 25' dem Paar erster Schubrollen 19' vorangestellt positioniert. Die Verriegelung 29' fixiert den Schwenkmechanismus 26' an der Traverse 20', sodass die zweiten Schubrollen 25' während der Materialübergabe relativ zur Traverse 20' ortsfest in der zweiten Position P2' gelagert bleiben.

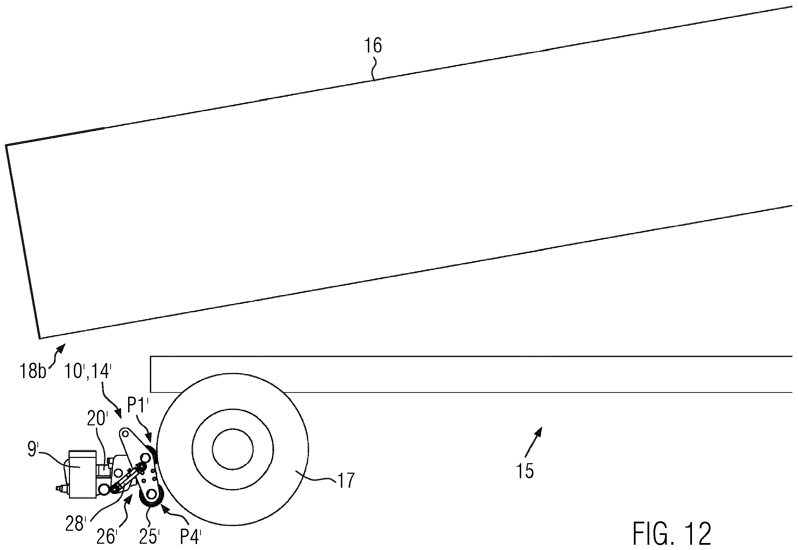

Figur 12 zeigt die Schubeinrichtung 10', 14' mit dem Paar zweiter Schubrollen 25' in der Ruheposition P4'. Figur 12 zeigt ferner, dass jetzt, im Gegensatz zur Figur 11, das Paar erster Schubrollen 19' an den Hinterreifen 17 des LKWs 15 andocken, um mittels des Straßenfertigers 1 oder Beschickerfahrzeugs 11 den LKW 15 während eines Materialübergabevorgangs voranzuschieben. Diese Einstellung der Schubeinrichtung 10', 14' kommt insbesondere dann zum Einsatz, wenn der LKW 15 eine Kippmulde 16 mit einem kurzen Kippmuldenüberstand 18b aufweist.

Die jeweiligen in Zusammenhang mit den Figuren 4 bis 12 beschriebenen Schubeinrichtungen 10, 10', 14, 14' können am Straßenfertiger 1 gemäß Figur 1 oder am Beschickerfahrzeug 14 gemäß Figur 2 zum Einsatz kommen, um während eines Materialübergabevorgangs an Hinterreifen 17 eines vorausfahrenden LKWs anzudocken.

Gemäß den Figuren 5 bis 12 sind der Wechselaufsatz 21 sowie der Schwenkmechanismus 26' zweigeteilt ausgebildet an der Traverse 20, 20' befestigt. Die voranstehend im Zusammenhang mit dem Wechselaufsatz 21 und dem Schwenkmechanismus 26' beschriebenen Merkmale können insbesondere für deren jeweiligen Segmente zur Verfügung stehen (z.B. Verriegelung 29, 29').

Insgesamt betrachtet sind die jeweiligen Schubeinrichtungen 10, 10', 14, 14' für Materialübergabevorgänge mit unterschiedlichen LKW-Modellen einsatzfähig und können insbesondere verhindern, dass es zu einer Kollision zwischen dem Gutbunker 4, 12 mit einer Kippmulde 16 des LKWs 15 kommt.

## Patentansprüche

1. Straßenbaumaschine (1, 11) in Form eines Straßenfertigers (1) zum Herstellen einer Einbauschicht (2) aus einem Einbaumaterial (3) oder eines Beschickerfahrzeugs (11) zum Beliefern des Straßenfertigers (1) mit einem zu verbauenden Einbaumaterial (3), wobei der Straßenfertiger (1) oder das Beschickerfahrzeug (11) einen Gutbunker (4, 12) zur Aufnahme des Einbaumaterials (3), der in Fahrtrichtung (F) gesehen vorne auf einem Chassis (5) des Straßenfertigers (1) oder Beschickerfahrzeugs (11) angeordnet ist, sowie eine Schubeinrichtung (10', 14') umfasst, die in Fahrtrichtung (F) gesehen vorderhalb des Gutbunkers (4, 12) am Chassis (5) derart befestigt ist, dass an der Schubeinrichtung (10', 14') gelagerte Schubrollen an Hinterreifen (17) eines LKWs (15) andocken können, wenn der LKW (15) das Einbaumaterial (3) in den Gutbunker (4, 12) des Straßenfertigers (1) oder des Beschickerfahrzeugs (11) schüttet, wobei die Schubrollen ein Paar erster Schubrollen (19') aufweisen, die längs der Fahrtrichtung (F) betrachtet relativ zu einer Traverse (20') der Schubeinrichtung (10', 14') in mindestens einer ersten Position (P1, P1') lagerbar sind, in welcher die ersten Schubrollen (19') in einer Aufnahme (24) der Traverse (20') befestigt sind, **dadurch gekennzeichnet, dass** die Schubeinrichtung (10', 14') ein weiteres Paar zweiter Schubrollen (25') umfasst, die in horizontaler Projektionsebene betrachtet wahlweise den ersten Schubrollen (19') vorangestellt sind.

2. Straßenbaumaschine nach Anspruch 1, **dadurch gekennzeichnet, dass** die Schubeinrichtung (10', 14') einen Schwenkmechanismus (26') umfasst, der dazu ausgebildet ist, die zweiten Schubrollen (25') in eine der ersten Position (P1') vorangelagerte, zweite Position (P2') zu bringen.

3. Straßenbaumaschine nach Anspruch 2, **dadurch gekennzeichnet, dass** die zweiten Schubrollen (25') mittels des Schwenkmechanismus (26') nach unten geklappt in einer Ruheposition (P4'), wodurch die ersten Schubrollen (19') für einen Materialübergabevorgang zum Einsatz kommen können, und/oder in einer Transportposition (P3'), in welcher die zweiten Schubrollen (25') in Richtung des Gutbunkers (4, 12) hochgeklappt sind, lagerbar sind.

4. Straßenbaumaschine nach einem der vorangehenden Ansprüche, **dadurch gekennzeichnet, dass** die zweiten Schubrollen (25') relativ zu den ersten Schubrollen (19') hydraulisch, mechanisch oder elektromechanisch verstellbar sind.

5. Straßenbaumaschine nach einem der vorangehenden Ansprüche, **dadurch gekennzeichnet, dass** die zweiten Schubrollen (25') schwenkbar um eine Lagerachse (27') der ersten Schubrollen (19') gelagert sind.

6. Straßenbaumaschine nach einem der vorangehenden Ansprüche, **dadurch gekennzeichnet, dass** die zweiten Schubrollen (25') von einem Bedienstand (6) des Straßenfertigers (1) oder des Beschickerfahrzeugs (11) aus verstellbar sind.

7. Straßenbaumaschine nach einem der vorangehenden Ansprüche, **dadurch gekennzeichnet, dass** die zweiten Schubrollen (25') werkzeuglos an der Schubeinrichtung (10', 14') verstellbar gelagert sind.

8. Straßenbaumaschine nach einem der vorigen Ansprüche, **dadurch gekennzeichnet, dass** die Traverse (20') an einem Querbalken (9) des Chassis (5) befestigbar ist, wobei die Befestigung eine gewisse Schrägstellung der Traverse (20') relativ zum Querbalken (9) ermöglicht.

9. Straßenbaumaschine nach einem der vorigen Ansprüche, **dadurch gekennzeichnet, dass** die Traverse (20') relativ zum Chassis (5) in verschiedenen vorangestellten Positionen befestigbar ist.

10. Straßenbaumaschine nach einem der vorigen Ansprüche, **dadurch gekennzeichnet, dass** die Schubeinrichtung (10', 14') mechanisch, pneumatisch und/oder hydraulisch gedämpft am Chassis (5) des Straßenfertigers (1) oder des Beschickerfahrzeugs (11) gelagert ist.

## Claims

1. A road making machine (1, 11) in the form of a road finishing machine (1) for producing a paving layer (2) from a laying material (3) or a charger vehicle (11) for supplying the road finishing machine (1) with a laying material (3) to be laid, wherein the road finishing machine (1) or the charger vehicle (11) comprises a material bunker (4, 12) for receiving the laying material (3) arranged, as viewed in the direction of travel (F), at the front on a chassis (5) of the road finishing machine (1) or the charger vehicle (11), and a pushing means (10, 10', 14, 14') which is fixed, as viewed in the direction of travel (F), forward of the material bunker (4, 12) at the chassis (5) such that pushing rollers mounted at the pushing means (10, 10', 14, 14') may dock to rear tires (17) of a truck (15) when the truck (15) is pouring the laying material (3) into the material bunker (4, 12) of the road finishing machine (1) or the charger vehicle (11), wherein the pushing rollers comprise a pair of first pushing rollers (19, 19') which may be mounted in at least one first position (P1, P1'), as viewed longitudinally to the direction of travel (F), with respect to a traverse (20, 20') of the pushing means (10, 10', 14, 14'), in which position the first pushing rollers (19, 19') are fixed in a seat (24) of the traverse (20, 20'), **characterized in that** the pushing means (10', 14') comprises a further pair of second pushing rollers (25') which may be, as viewed in the horizontal plane of projection, selectively positioned forward of the first pushing rollers (19').

2. A road making machine according to claim 1, **characterized in that** the pushing means (10', 14') comprises a swivel mechanism (26') embodied to bring the second pushing rollers (25') into a second position (P2') forward of the first position (P1').

3. A road making machine according to claim 2, **characterized in that** the second pushing rollers (25') may be mounted tipped down in a rest position (P4') by means of the swivel mechanism (26'), whereby the first pushing rollers (19') may be employed for a material transfer process, and/or in a transport position (P3') in which the second pushing rollers (25') are tipped up in the direction of the material bunker (4, 12).

4. A road making machine according to one of the previous claims, **characterized in that** the second pushing rollers (25') may be adjusted hydraulically, mechanically or electromechanically with respect to the first pushing rollers (19').

5. A road making machine according to one of the previous claims, **characterized in that** the second pushing rollers (25') are pivoted about a bearing axis (27') of the first pushing rollers (19').

6. A road making machine according to one of the previous claims, **characterized in that** the second pushing rollers (25') are adjustable from a control platform (6) of the road finishing machine (1) or the charger vehicle (11).

7. A road making machine according to one of the previous claims, **characterized in that** the second pushing rollers (25') are mounted at the pushing means (10', 14') to be adjustable without tools.

8. A road making machine according to one of the preceding claims, **characterized in that** the traverse (20, 20') may be fixed to a crossbeam (9) of the chassis (5), wherein the fixing permits a certain inclination of the traverse (20, 20') with respect to the crossbeam (9).

9. A road making machine according to one of the preceding claims, **characterized in that** the traverse (20, 20') may be fixed in different forward positions with respect to the chassis (5).

10. A road making machine according to one of the preceding claims, **characterized in that** the pushing means (10, 10', 14, 14') is mounted at the chassis (5) of the road finishing machine (1) or the charger vehicle (11) to be dampened mechanically, pneumatically and/or hydraulically.

## Revendications

1. Machine de construction routière (1, 11) sous la forme de finisseuse de route (1) pour réaliser une couche de revêtement (2) à partir d'un matériau de revêtement (3) ou d'un véhicule chargeur (11) pour alimenter la finisseuse de route (1) en matériau de revêtement (3) à poser, la finisseuse de route (1) ou le véhicule chargeur (11) comprenant une trémie de matériau (4, 12) pour recevoir le matériau de revêtement (3), qui est disposée à l'avant, vu dans le sens de la marche (F), sur un châssis (5) de la finisseuse de route (1) ou du véhicule chargeur (11), ainsi qu'un dispositif de poussée (10', 14'), qui, vu dans le sens de la marche (F), est fixé sur le châssis (5) à l'avant de la trémie de matériau (4, 12) de telle sorte que des galets de poussée montés sur le dispositif de poussée (10', 14') peuvent s'amarrer aux pneus arrière (17) d'un camion (15) lorsque le camion (15) dépose le matériau de revêtement (3) dans la trémie de matériau (4, 12) de la finisseuse de route (1) ou du véhicule chargeur (11), les galets de poussée comprenant une paire de premiers galets de poussée (19') qui, vus le long de la direction de déplacement (F), peuvent être stockés par rapport à une traverse (20') du dispositif de poussée (10', 14') dans au moins une première position (P1, P1') dans laquelle les premiers galets de poussée (19') sont fixés dans un réceptacle (24) de la traverse (20'),
**caractérisé en ce que**
le dispositif de poussée (10', 14') comprend une autre paire de seconds galets de poussée (25') qui, vus dans le plan de projection horizontal, sont placés sélectivement en avant des premiers galets de poussée (19').

2. Machine de construction routière selon la revendication 1, **caractérisé en ce que** le dispositif de poussée (10', 14') comprend un mécanisme de pivotement (26') conçu pour amener les seconds galets de poussée (25') dans une seconde position (P2') située en amont de la première position (P1').

3. Machine de construction routière selon la revendication 2, **caractérisée en ce que** les seconds galets de poussée (25') peuvent être stockés, au moyen du mécanisme de pivotement (26'), repliés vers le bas dans une position de repos (P4'), ce qui permet d'utiliser les premiers galets de poussée (19') pour une opération de transfert de matériau, et/ou dans une position de transport (P3'), dans laquelle les seconds galets de poussée (25') sont repliés vers le haut en direction de la trémie de matériau (4, 12).

4. Machine de construction routière selon l'une des revendications précédentes, **caractérisée en ce que** les seconds galets de poussée (25') sont réglables par rapport aux premiers galets de poussée (19') par voie hydraulique, mécanique ou électromécanique.

5. Machine de construction routière selon l'une des revendications précédentes, **caractérisée en ce que** les seconds galets de poussée (25') sont montés pivotants autour d'un axe de palier (27') des premiers galets de poussée (19').

6. Machine de construction routière selon l'une des revendications précédentes, **caractérisée en ce que** les seconds galets de poussée (25') sont réglables à partir d'un poste de commande (6) de la finisseuse de route (1) ou du véhicule chargeur (11).

7. Machine de construction routière selon l'une des revendications précédentes, - **caractérisée en ce que** les seconds galets de poussée (25') sont montés réglables sans outil sur le dispositif de poussée (10', 14').

8. Machine de construction routière selon l'une des revendications précédentes, **caractérisée en ce que** la traverse (20') peut être fixée à une poutre transversale (9) du châssis (5), la fixation permettant une certaine inclinaison de la traverse (20') par rapport à la poutre transversale (9).

9. Machine de construction routière selon l'une des revendications précédentes, **caractérisée en ce que** la traverse (20') peut être fixée par rapport au châssis (5) dans différentes positions avancées.

10. Machine de construction routière selon l'une des revendications précédentes, **caractérisée en ce que** le dispositif de poussée (10', 14') est monté sur le châssis (5) de la finisseuse de route (1) ou du véhicule chargeur (11) de manière à être amorti mécaniquement, pneumatiquement et/ou hydrauliquement.
